(19) Europäisches Patentamt
European Patent Office
Office européen des brevets

(11)  EP 4 742 797 A1

(12)  EUROPEAN PATENT APPLICATION

(43) Date of publication:
13.05.2026   Bulletin 2026/20

(21) Application number: 25210274.4

(22) Date of filing: 22.10.2025

(51) International Patent Classification (IPC):
H04W 72/0453 (2023.01)    H04W 72/121 (2023.01)

(52) Cooperative Patent Classification (CPC):
H04W 72/0453; H04W 72/121

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority:  07.11.2024  FI 20246313

(71) Applicant: Nokia Solutions and Networks Oy
02610 Espoo (FI)

(72) Inventors:
• KELA, Kalle Petteri Kaarina (FI)
• LIU, Bryan
  Massy (FR)
• VALCARCE RIAL, Alvaro
  Massy (FR)

(74) Representative: Nokia EPO representatives
Nokia Technologies Oy
Karakaari 7
02610 Espoo (FI)

(54)  **ML-BASED SCHEDULING WITH PER-SIGNAL PATH INFERENCE IN A WIRELESS COMMUNICATION SYSTEM**

(57)    The present subject matter relates to a method comprising: determining, for a specific time unit, an available set of frequency resource units, for each signal path of multiple signal paths, determine at least one feature vector descriptive of a set of devices, the set of frequency resource units and the signal path, perform per feature vector of the at least one feature vector an inference pass of a reinforcement machine learning agent model to obtain an individual output using the feature vector as input, and use the at least one individual output to determine an individual scheduling configuration of the set of frequency resource units to the set of devices; using the individual scheduling configurations to determine a scheduling decision to assign the set of frequency resource units to the set of devices, such that a frequency resource unit can be assigned to one or more signal paths.

Determining, for a specific time unit, an available set of frequency resource units for scheduling a set of devices of a wireless communication system using multiple signal paths for data transmission — 201

Determining at least one feature vector descriptive of the set of devices, the set of frequency resource units and the signal path — 203

Performing per feature vector of the at least one feature vector an inference pass of a machine learning model to obtain an individual output using the feature vector as input — 205

Using the at least one individual output to determine an individual scheduling configuration of the set of frequency resource units to the set of devices — 207

Using the individual scheduling configurations to determine a scheduling decision to assign the set of frequency resource units to the set of devices, such that a frequency resource unit can be assigned to one or more signal paths — 209

Fig. 2

EP 4 742 797 A1

**Description**

**TECHNICAL FIELD**

Various example embodiments relate to telecommunication systems, and more particularly to an apparatus for machine learning (ML) based scheduling in a wireless communication system.

**BACKGROUND**

In modern wireless communication systems, the demand for higher data rates, efficient resource utilization, and the ability to serve a growing number of devices simultaneously is ever-increasing. As networks become more complex, dynamic resource management becomes critical for ensuring that available spectrum is used efficiently, while maintaining high-quality service for all users. Hence, advanced techniques that account for real-time network conditions, such as varying interference levels, user mobility, and fluctuating traffic loads, may be essential for optimizing performance.

**SUMMARY**

Example embodiments provide an apparatus (first apparatus) for a wireless communication system, the first apparatus comprising at least one processor; and at least one memory storing instructions that, when executed by the at least one processor, cause the first apparatus to: determine, for a specific time unit, an available set of frequency resource units for scheduling a set of devices of the wireless communication system using multiple signal paths for data transmission; for each signal path of the signal paths, determine at least one feature vector descriptive of the set of devices, the set of frequency resource units and the signal path, perform per feature vector of the at least one feature vector an inference pass of a machine learning model to obtain an individual output using the feature vector as input, and use the at least one individual output to determine an individual scheduling configuration of the set of frequency resource units to the set of devices; use the individual scheduling configurations to determine a scheduling decision to assign the set of frequency resource units to the set of devices, such that a frequency resource unit can be assigned to one or more signal paths.

Example embodiments provide a method (first method) comprising determining, for a specific time unit, an available set of frequency resource units for scheduling a set of devices of a wireless communication system using multiple signal paths for data transmission; for each signal path of the signal paths, determine at least one feature vector descriptive of the set of devices, the set of frequency resource units and the signal path, perform per feature vector of the at least one feature vector an inference pass of a machine learning model to obtain an individual output using the feature vector as input, and use the at least one individual output to determine an individual scheduling configuration of the set of frequency resource units to the set of devices; using the individual scheduling configurations to determine a scheduling decision to assign the set of frequency resource units to the set of devices, such that a frequency resource unit can be assigned to one or more signal paths.

Example embodiments provide a computer program product comprising processor executable instructions for causing an apparatus for performing at least the first method.

Example embodiments provide a non-transitory computer readable medium comprising program instructions that, when executed by an apparatus, cause the apparatus to perform at least the first method.

Example embodiments provide an apparatus (second apparatus) for training a reinforcement learning agent in accordance with a reinforcement learning algorithm using as environment a wireless communication system, the second apparatus comprising at least one processor; and at least one memory storing instructions that, when executed by the at least one processor, cause the second apparatus in each training step to: determine for the training step a time unit, a set of devices, a set of frequency resource units, a signal path of signal paths for transmission in the time unit; use by the reinforcement learning agent a state defined by a feature vector descriptive of the set of devices, the set of frequency resource units and the signal path to perform an action comprising individual actions, wherein each individual action is defined by an assignment of a respective frequency resource unit of the set of frequency units, and determine a reward which is a combination of individual rewards of the individual actions respectively for adapting the reinforcement learning agent based on the reward.

Example embodiments provide a method (second method) for training a reinforcement learning agent in accordance with a reinforcement learning algorithm using as environment a wireless communication system, the second method comprising in each training step: determining for the training step a time unit, a set of devices, a set of frequency resource units, a signal path of signal paths for transmission in the time unit; using by the reinforcement learning agent a state defined by a feature vector descriptive of the set of devices, the set of frequency resource units and the signal path to perform an action comprising individual actions, wherein each individual action is defined by an assignment of a respective frequency resource unit of the set of frequency units; and determining a reward which is a combination of individual rewards of the individual actions respectively for adapting the reinforcement learning agent based on the reward.

Example embodiments provide a computer program product comprising processor executable instructions for causing an apparatus for performing at least the second method.

Example embodiments provide a non-transitory computer readable medium comprising program instructions that, when executed by an apparatus, cause the apparatus to perform at least the second method.

"First," "Second," etc. as used herein, these terms are used as labels for nouns that they precede, and do not imply any type of ordering (e.g., spatial, temporal, logical) unless explicitly defined as such.

## BRIEF DESCRIPTION OF THE DRAWINGS

The accompanying figures are included to provide a further understanding of examples, and are incorporated in and constitute part of this specification. In the figures:

FIG. 1 is a block diagram illustrating an example radio access network in accordance with an example of the present subject matter;

FIG. 2 is a process flowchart illustrating a method according to an example of the present subject matter;

FIG. 3 is a process flowchart illustrating a training method for training a reinforcement learning agent using a reinforcement learning algorithm using as environment a wireless communication system according to an example of the present subject matter;

FIG. 4 is a diagram illustrating an example machine learning model in accordance with an example of the present subject matter;

FIG. 5 is a process flowchart illustrating a scheduling method according to an example of the present subject matter;

FIG. 6 is a diagram illustrating a process of obtaining Q-value vectors for evaluating a policy loss function for training a reinforcement learning agent according to an example of the present subject matter;

FIG. 7 is a block diagram illustrating an example apparatus according to the present subject matter.

## DETAILED DESCRIPTION

In the following description, for purposes of explanation and not limitation, specific details are set forth such as particular architectures, interfaces, techniques, etc., in order to provide a thorough understanding of the examples. However, it will be apparent to those skilled in the art that the disclosed subject matter may be practiced in other illustrative examples that depart from these specific details. In some instances, detailed descriptions of well-known devices and/or methods are omitted so as not to obscure the description with unnecessary detail.

The present subject matter may efficiently manage and allocate frequency resources in real-time by dynamically assessing available frequency resource units, optimizing resource allocation, and adapting to network changes such as interference and user mobility, which may enhance overall performance and improve user experience. Leveraging machine learning, the system may continuously refine decision accuracy over time and optimize scheduling policies based on network behavior and historical performance. Its scalability may ensure efficient handling of large networks with numerous devices and data streams, allowing for more effective resource management in high-demand environments.

The wireless communication system comprises nodes such as base stations, wherein each node may serve devices located within the node's geographical area of service. The wireless communication system may support one or more radio access technologies (RATs). A radio access technology of the radio access technologies may, for example, be evolved universal terrestrial radio access (E-UTRA), 5G new radio (NR), or a 6G based system, but it is not limited to, as a person skilled in the art may apply the present subject matter to other wireless communication systems provided with necessary properties. The device may refer to an equipment that connects to and communicates with the wireless communication system to access services and applications provided by the wireless communication system. The device may, for example, be a user equipment. The device may, for example, comprise any one of: a mobile phone, a tablet, an Internet of things (IoT) device, or a laptop.

The wireless communication system may define frames that are predefined in terms of their duration and structure, operating in a continuous and cyclic manner, repeating every n milliseconds. Each frame may consist of time units, which may be further subdivided into slots or subframes. These time units may represent the smallest interval in which scheduling decisions may be made, and they may be aligned with the frame's cyclic nature. As each frame repeats cyclically, the scheduling may continue in each subsequent time unit, allowing the first apparatus to dynamically adjust resource allocations based on real-time network conditions. The present subject matter may enable the scheduling in each time unit using the first apparatus so as to enable that within each time unit, available resources, including both frequency and time may be assigned to different devices based on their current data demands and channel conditions. For example, the time unit may be a Transmission Time Interval (TTI) or any other time interval supported by the radio access technology of the wireless communication system. The time unit for which the scheduling is performed may be allocated for uplink or downlink transmissions.

The first apparatus may be configured to determine, for a specific time unit, an available set of frequency resource units for scheduling a set of devices of the wireless communication system using multiple signal paths for data transmission.

The set of devices may, for example, be indicated in a time domain scheduling decision covering the specific time unit. For example, the time domain scheduling decision covering the time unit may be received or provided by the first apparatus. In one example, the first apparatus may include both a time domain scheduler and a frequency domain scheduler. The time domain scheduler makes the time domain scheduling decision, which is then received by the first apparatus at the frequency domain scheduler. Alternatively, the time domain scheduling decision may be made by another, remote apparatus and then communicated to the first apparatus. Using one compound scheduler can reduce the complexity of coordinating between different schedulers, leading to simpler implementation and maintenance. On the other hand, having separate schedulers may allow each to specialize in optimizing their respective dimensions, which may result in better performance in each domain.

During the specific time unit, data transmission may occur from the first apparatus to the set of devices, or alternatively, from the set of devices to the first apparatus. As the specific time unit may represent the smallest scheduling interval, the transmissions within this specific time unit may be referred to as simultaneous transmission. These simultaneous transmissions may be carried out using multiple signal paths, with each signal path encoding a respective one or more streams of data.

The first apparatus may be configured to identify or determine the set of frequency resource units which are available for assignment in the specific time unit. For example, frequency resource units of the wireless communication system may be checked by the first apparatus to determine which are available for allocation to the set of devices during the specific time unit. The availability may be defined by factors such as interference levels, pre-existing assignments, and traffic demands from other devices. This process may ensure efficient operation by considering only unassigned or underutilized portions of the spectrum for new transmissions. The frequency resource unit may represent a unit of frequency allocation. The frequency resource unit may, for example, be a resource block (RB), a resource block group (RBG) or any other frequency resource unit supported by the radio access technology of the wireless communication system. The set of frequency resource units may belong to one frequency band or belong to multiple frequency bands. Within one frequency band, channel conditions may be more consistent, simplifying the implementation of transmission techniques such as Multiple Input Multiple Output (MIMO) technique. Utilizing multiple frequency bands may increase the total available spectrum, enhancing overall network capacity and throughput and enabling implementation of transmission techniques such as carrier aggregation technique.

Once the time and frequency resources available for scheduling have been determined, the first apparatus may be configured to utilize this information to assign the set of frequency resource units to devices of the set of devices. Indeed, the feature "assign the set of frequency resource units to the set of devices" may involve allocating one or more frequency resource units to each device in the set of devices; however, it may alternatively include scenarios where one or more devices in the set of devices are not assigned any frequency resource units, while the remaining devices of the set of devices are allocated the frequency resource units.

For example, the first apparatus may be configured to: for each signal path of the signal paths: determine at least one feature vector descriptive of the set of devices, the set of frequency resource units and the signal path, perform per feature vector of the at least one feature vector an inference pass of a machine learning model to obtain an individual output using the feature vector as input, and use the at least one individual output to determine an individual scheduling configuration of the set of frequency resource units to the set of devices.

For example, the number of signal paths may be greater than or equal to two. For each signal path of the signal paths a number of feature vectors may be generated. In one example (referred to as single-feature vector approach), the number of feature vectors determined per signal path may be one. In this case, each determined feature vector may be descriptive of the set of devices, the (entire) set of frequency resource units and the respective signal path. Alternatively (in an example referred to as multi-feature vector approach), the set of frequency resource units may be divided into a number of subsets of frequency resources units, wherein the number of feature vectors determined per signal path may be the number of subsets of the set of frequency resources units. For example, the subsets may be of equal size, meaning that the set of frequency resource units are divided evenly across the subsets, with each subset containing the same number of resource units. In this case, each determined feature vector may be descriptive of the set of devices, the respective subset of frequency resource units and the respective signal path. In one example, each subset of frequency resource units may be one frequency resource unit. In this case, the number of feature vectors determined per signal path may be the number of the set of frequency resource units. Hence, the determination of the feature vectors may result in a total number of feature vectors which is the number of signal paths when only one feature vector is generated per signal path or the number of signal paths multiplied by the number of subsets when the frequency resource units are divided into the subsets to obtain one feature vector per subset.

The feature vector may comprise elements, each element comprising a value of a respective feature. That is, the feature vector comprises values of features, wherein those features are descriptive of the set of devices and descriptive of the set of frequency resource units and descriptive of the signal path. The feature vector may be provided in a format for the machine learning model to process it.

For each feature vector of the determined feature vectors, the first apparatus may be configured to perform an inference pass (e.g., forward pass) by at least inputting the feature vector to the machine learning model in order to receive the corresponding individual output. The inference pass of the machine learning model may refer to a process of feeding input data into the machine learning model to generate an output by the machine learning model. Depending on whether the single-feature vector or multi-feature vector approach is applied, there may be at least one individual output per signal path. This may mean that for each signal path of the signal paths, the number of individual outputs may either be one (in the single-feature vector approach) or equal to the number of subsets of the set of frequency resource units (in the multi-feature vector approach). In the case of the single-feature vector approach, the individual output may provide a distribution of the entire set of frequency resource units across the set of devices, determining how the resources may be allocated in a holistic manner. However, in the case of the multi-feature vector approach, the individual output may instead provide a distribution of the respective subset of the frequency resource units to the set of devices. Here, each feature vector corresponds to a subset of the frequency resource units, allowing for a more granular allocation where the resources are divided into smaller groups, and the first apparatus may make independent decisions for each subset.

The machine learning model may be a model that has been trained to receive, for each time unit and for each signal path, as input a feature vector descriptive of a set of devices which are schedulable for the time unit, descriptive of frequency resource units and of the signal path and to provide an individual output. In one example, the machine learning model may be trained in accordance with a reinforcement learning (RL) algorithm. In this case, the machine learning model may be referred to as reinforcement learning agent. Alternatively, the machine learning model may be trained using other techniques such as supervised learning. For example, the machine learning model may be trained with supervised learning by using some known expert scheduling decisions and associated states of the wireless communication system defined by respective feature vectors, wherein the expert scheduling decisions are obtained for the states respectively. The expert scheduling decisions may be obtained from a desired expert scheduling algorithm, or, for example, from exhaustive search that exhaustively calculates the scheduling decision that provides the highest scheduling metric. The scheduling metric may be based on single user or multi-user throughput, or proportional fair metric. This may enable training the machine learning model with supervised learning to provide expert scheduling decisions.

The machine learning model may be, for example, a neural network such as deep neural network. In this case, the first apparatus may be referred to as a deep scheduler, because the machine learning model, implemented as a deep neural network, may enable resource scheduling in the wireless communication system.

The output layer of the machine learning model may depend on whether the single-feature or multi-feature vector approach is used. As described herein, the frequency resource units involved (referred to involved frequency resource units) in an inference pass for a specific feature vector may depend on whether the single-feature vector or multi-feature vector approach is used. If the single-feature vector approach is applied, the involved frequency resource units include the entire set of frequency resource units. In contrast, if the multi-feature vector approach is used, the involved frequency resource units in an inference pass for a specific feature vector are limited to the subset of frequency resource units associated with that feature vector. Hence, the output layer of the machine learning model may comprise an output block per frequency resource unit of the involved frequency resource units. This may mean that if the single-feature or multi-feature vector approach is used, the output layer of the machine learning model may comprise an output block per frequency resource unit of the entire set of frequency resource units. In contrast, if the multi-feature vector approach is used, the output layer of the machine learning model may comprise an output block per frequency resource unit of the subset of frequency resource units. The individual output of the machine learning model may provide a distribution of the involved frequency resource units across the set of devices. The distribution in this context may refer to the allocation of the involved frequency resource units across the set of devices, covering different possible outcomes. This may include cases where all the set of devices are assigned a portion of the frequency resource units, or some devices are assigned resources while others receive none. For example, the individual output may provide an allocation probability distribution of each frequency resource unit of the involved frequency resource units across the set of devices e.g., if the involved frequency resource units are two RBGs, the individual output may comprise one allocation probability distribution across the devices for one RBG and further comprise another allocation probability distribution across the devices for the other RBG. For example, the individual output may comprise for each frequency resource unit of the involved frequency resource units a probability of assigning that frequency unit to each device of the set of devices. The involved frequency resource units may be the set of frequency resource units if the single-feature vector approach is applied, or a subset of frequency resource units if the multi-feature vector approach is applied.

The first apparatus may be configured to determine, for each signal path of the signal paths, the individual scheduling configuration of the set of frequency resource units for the set of devices. To achieve this, the first apparatus may use the one or more individual outputs obtained from the inference passes performed for the each signal path. In the case of the single-feature vector approach, this may mean that a single individual output is used for each signal path, corresponding to the feature vector that represents the entire set of frequency resource units, to determine the individual scheduling configuration. In contrast, for the multi-feature vector approach, multiple individual outputs-each corresponding to a subset of frequency resource units-are used to determine the individual scheduling configuration for the each signal path. This may result in a number of individual scheduling configurations which is equal to the number of signal paths.

The first apparatus may further be configured to use the resulting individual scheduling configurations to determine a scheduling decision to assign the set of frequency resource units to the set of devices. This may be performed such that a frequency resource unit can be assigned to one or more signal paths of the signal paths. For example, each frequency resource unit X may be assigned to one or more signal paths SPs of the signal paths, meaning that the frequency resource unit X may be assigned to one or more devices to which or from which the data stream(s) of the signal path SP are directed.

The resulting individual scheduling configurations may, for example, provide candidate scheduling decisions, each indicating how to allocate the set of frequency resource units to all or part of the set of devices. The first apparatus may then perform an additional layer of scheduling that may involve combining these individual scheduling configurations. This combination may, for example, be performed based on a criterion. For instance, the criterion may be the maximization of overall throughput, minimization of interference, or prioritization of devices with higher quality of service (QoS) requirements. The criterion may not exclude that each frequency resource unit of the set of frequency units is assigned to more than one signal path of the signal paths.

For example, for each signal path of the signal paths, the corresponding one or more individual outputs may provide per frequency unit of the set of frequency units a probability of assigning that frequency unit to each device of the set of devices. The individual scheduling configuration for the each signal path may use these probabilities to select or decide the assignment of the set of frequency units to specific devices of the set of devices respectively. This may provide a candidate scheduling decision for the each signal path. The candidate scheduling decisions obtained for the signal paths respectively may be combined or one of them be selected in order to obtain the scheduling decision.

Indeed, for the signal paths, the first apparatus may have already generated individual scheduling configurations that indicate how the set of frequency resource units can be allocated to all or part of the set of devices. After obtaining the individual scheduling configurations, the first apparatus may proceed with a final scheduling decision. This final scheduling decision may involve assigning specific frequency resource units to the set of devices based on the individual scheduling configuration for each signal path, ensuring efficient and effective distribution of available resources. The final scheduling decision may allow a single frequency resource unit to be assigned to more than one signal path, meaning that the frequency resource unit is not limited to serving just one device on a single signal path but may instead be shared across multiple devices or signal paths. Each frequency resource unit may be assigned either as a single path assignment, where the frequency resource unit is allocated exclusively to one signal path, or as a multiple path assignment, where the frequency resource unit is simultaneously used across multiple signal paths. The sharing of frequency resource units may be enabled, for example, through the use of transmission techniques such as beamforming and spatial multiplexing, which allow for spatial separation of signals for data transmission, enabling multiple devices to use the same frequency resources simultaneously. This may ensure efficient use of resources for simultaneous transmissions.

The data to be transmitted within the specific time unit may represent multiple data streams that may be transmitted simultaneously to the set of devices. Each data stream of the data streams may be associated with one or more devices of the set of devices. For example, a data stream may be associated with one distinct device of the set of devices. In another example, more than one data stream may be associated with one distinct device of at least part of the set of devices and one data stream may be associated with one distinct device of the remaining part of the set of devices. Additionally, each signal path of the signal paths may represent one or more of these data streams. For example, in some cases, each signal path may correspond to a distinct data stream, providing a direct mapping between signal paths and data streams. In scenarios, e.g., involving multi-user MIMO (MU-MIMO) techniques, the signal paths may represent different spatial layers, or ranks, for the set of devices, allowing multiple streams to be transmitted to the same or different devices simultaneously. Each rank of the ranks may refer to the number of independent data streams that can be transmitted simultaneously to or from a specific device of the set of devices. Each signal path may, for example, be associated with a corresponding antenna in an antenna array of the first apparatus, enabling the apparatus to generate a radio frequency signal for each signal path.

The first apparatus may be configured to transmit data during the specific time unit to the set of devices according to the scheduling decision. Alternatively, the set of devices may be configured to transmit data during the specific time unit to the first apparatus according to the scheduling decision

The present subject matter may provide alternative implementations for handling the inference passes, which correspond to the number of feature vectors. These implementations may vary based on how the first apparatus processes the feature vectors at either the signal path level or the feature vector level. Each of these implementations may be chosen based on the first apparatus's specific computational constraints and performance requirements, optimizing for either speed, resource efficiency, or a balance between the two. One example implementation may be sequential execution, where the inference passes are performed one after another for each feature vector. This approach may ensure a controlled and ordered processing sequence. An alternative approach may be parallel execution, where the inference passes are performed in parallel across multiple feature vectors. The parallel execution of inference passes may, for example, be carried out using multiple instances of the machine learning model, with each instance handling a separate execution in parallel. This method may greatly reduce processing time, as the first apparatus can handle multiple signal paths and feature vectors concurrently. Another implementation might combine path-level parallelism and feature vector-level sequential processing. In this case, the first apparatus may process multiple signal paths in parallel but processes the feature vectors associated with each signal path sequentially. This may balance the need for efficiency while managing the system's computational load. Conversely, feature vector-level parallelism within a single signal path may be employed, where all feature vectors associated with one signal path are processed simultaneously, before moving on to the next signal path.

According to one example, the first apparatus may be configured to determine the individual scheduling configuration for a current inference pass by further using the one or more individual scheduling configurations of one or more previous inference passes respectively.

This may enable the first apparatus to determine the individual scheduling configuration for a current inference pass by incorporating the results of one or more previous inference passes. The first apparatus may use the scheduling configurations from earlier inference passes as input or context to refine and improve the current individual scheduling configuration. With this, each inference pass may not be isolated but rather dependent on the results of previous inference passes, meaning the first apparatus learns from prior outputs and continuously refines its decisions. By incorporating prior scheduling configurations, the first apparatus may also avoid conflicts or inefficiencies that could arise if the inference passes were independent of each other.

In one example, the one or more previous inference passes may be the most recent (last) inference pass, where the current individual scheduling configuration directly builds upon the outcome of that single previous pass. Alternatively, the one or more previous inference passes may include multiple prior inference passes, where the first apparatus may aggregate and analyze the individual scheduling configurations from several inference passes to identify trends or patterns before making the current individual scheduling configuration. Alternatively, the one or more previous inference passes may be selected previous inference passes, where only certain key inference passes (e.g., based on specific criteria like network load) may be used to influence the current individual scheduling configuration.

According to one example, the first apparatus may be configured to determine the individual scheduling configuration such that it excludes previous assignments of devices to frequency resource units in the one or more previous inference passes. A (previous) assignment may refer to a mapping or association of a frequency resource unit to a device that was previously decided by the first apparatus.

With this example, the first apparatus may be configured to determine the individual scheduling configuration in a way that deliberately excludes the previous assignments of devices to frequency resource units made in one or more prior inference passes. This may mean that when the first apparatus makes new scheduling decision, it may avoid reusing the same frequency resource unit for the same device that were assigned in earlier passes, ensuring dynamic and adaptable resource allocation. By excluding previous assignments, the first apparatus may force itself to explore new scheduling possibilities for each subsequent pass, redistributing frequency resource units to different devices or signal paths.

The exclusion of previous assignments may be implemented using a mask. The mask may, for example, be provided as a binary vector, wherein a value of 0 in the vector indicates that the corresponding assignment is invalid (to be excluded) and a value of 1 in the vector indicates that the assignment is valid and may be considered in the scheduling decision. For instance, if the machine learning model is a neural network, the output layer may include one output block for each frequency resource unit of the involved frequency resource units. Each output block contains at least one neuron or output for each device in the set of devices. Each neuron in the output block represents a potential assignment of the respective frequency resource unit to a particular device. The mask may be applied to exclude neurons associated with previous assignments in the output layer, before the output layer is used to make the scheduling decision.

According to one example (referred to as dual model example), the machine learning model comprises a first model and a second model, wherein the first model is configured to perform the one or more inference passes corresponding to a first signal path of the signal paths and the second model is configured to perform the remaining inference passes.

For example, the machine learning model may consist of two distinct models: the first model responsible for handling the inference passes related to a specific signal path, the first signal path, and the second model tasked with performing inference passes for the remaining signal paths. The machine learning process may be divided, with the first model applying a specialized approach to the first signal path, potentially due to its unique characteristics, while the second model handles the other paths more generally. These models may operate in parallel, enhancing processing speed and efficiency by allowing simultaneous inference passes for multiple paths, or sequentially, where the first model processes its pass before the second model handles the remaining paths.

By dedicating a separate machine learning model to a specific signal path, the present subject matter may apply more refined and accurate scheduling decisions to that path. This may be particularly useful when certain signal paths, such as those supporting essential devices or services, may require more precise handling. The second model may still manage the remaining paths efficiently, ensuring a balanced overall system performance while prioritizing important paths.

According to one example, the one or more inference passes corresponding to the first signal path are performed without user pairing, wherein the remaining inference passes are performed with user pairing.

For the first signal path, inference passes are performed independently, meaning the first apparatus may allocate resources and make scheduling decisions exclusively for that path, without coordinating with other devices, e.g., without employing spatial coordination. This may enable using the first signal path for high-priority transmissions that require dedicated resources. In contrast, for the remaining signal paths, user pairing is employed, where the first apparatus may group multiple devices together during the scheduling process. In systems like MU-MIMO, this may allow multiple users to share the same frequency resource through techniques such as spatial multiplexing and beamforming, maximizing efficiency by enabling simultaneous transmissions on the same resources without interference.

According to one example, the machine learning model comprises a neural network. The neural network comprises an input layer comprising an input block per device of the set of devices. The first apparatus is configured to determine an input vector per device of the set of devices. The input vector is descriptive of the device and the set of frequency resource units or subset of frequency resource units (depending on whether the single-feature vector or multi-feature vector approach is used), wherein the first apparatus is configured to determine the feature vector by including in a specific arrangement the input vectors within the feature vector, wherein the specific arrangement is descriptive of the signal path.

The fact that each device in the set of devices has a corresponding input block in the input layer may enable the network to handle multiple devices in parallel and treat each one individually based on its characteristics and resource requirements. For each device, an input vector that encapsulates data about the device and its relationship to other devices and the frequency resource units may be created. This input vector may describe either the full set of frequency resource units or a subset, depending on whether the first apparatus is operating with the single-feature vector or multi-feature vector approach. With the single-feature vector approach, the entire set of frequency resources is considered in one feature vector, while with the multi-feature vector approach, the frequency resources are divided into subsets. The feature vector is then constructed by combining the input vectors of all devices in a specific arrangement, which also reflects the signal path. For example, the arrangement may be set for a specific forward pass and signal path so that the devices involved in the data stream(s) of the signal path are given a higher ranking. This may enable the feature vector to reflect or represent the signal path. This design may allow to capture both device-specific and path-specific information in a single feature vector, which may optimize scheduling decisions.

According to one example, the specific arrangement of the input vectors is a random arrangement of the input vectors.

In this example, the input vectors may be arranged randomly within the feature vector. The random arrangement may mean that there is no pre-determined order or sorting criterion for how the input vectors are placed. Each input vector, representing a device's characteristics and its relationship to the frequency resource units, may be assigned a random position within the feature vector that the machine learning model uses to make scheduling decisions.

Random arrangements may provide simplicity by eliminating the need for sorting computations. Additionally, randomness may prevent bias towards specific devices or conditions, promoting equal treatment and letting the model naturally identify important features.

According to one example, the first apparatus is configured to sort the set of devices in accordance with a device metric, wherein the specific arrangement of the input vectors is provided according to the sorting.

The first apparatus may sort the set of devices according to a specific device metric before determining the arrangement of the input vectors in the feature vector. The sorting may ensure that input vectors are arranged in a structured manner based on the value of the chosen metric. This approach may introduce a level of prioritization or optimization based on the device's importance or condition. After sorting, the specific arrangement of the input vectors within the feature vector reflects the sorted order.

According to one example, the device metric is at least one of: QoS, proportional fair metric or lowest spatial cross correlation of the device.

Sorting by QoS may ensure that high-priority, latency-sensitive devices receive precedence in resource allocation, enhancing the user experience. The proportional fair metric may provide a balance between maximizing system throughput and ensuring fairness across devices. Additionally, sorting by spatial cross-correlation may reduce interference between devices, allowing for more effective use of spatial multiplexing.

According to one example, the first apparatus is configured to determine the scheduling decision in accordance with a multi-user multiple input, multiple output (MU-MIMO) technique, wherein the signal paths represent the MU-MIMO user layers respectively. The MU-MIMO user layers may represent ranks of the set of devices.

According to one example, the machine learning model comprises a neural network. The neural network comprises an output layer whose dimension is equal to the number of the set of frequency resource units multiplied by the number of the set of devices plus one.

The output layer of the neural network may be set to a size equal to $M \times (N+1)$ so that the neural network is called only once to schedule the set of frequency resource units in the time unit, where $M$ is the number of the set of frequency resource units, and $N$ is the number of the set of devices. The additional 1 indicates that a null space may be needed to allocate no users to a frequency resource unit. This may, for example, mean that the resource allocation for the frequency resource unit is skipped.

According to one example, the signal paths represent respectively data streams for transmission to the set of devices. This may mean that for every signal path, there is a distinct stream of data being delivered to one or more devices of the set of devices. In multi-path or multi-stream transmission systems, like MU-MIMO, each signal path may carry unique data, allowing multiple devices to receive different streams of information simultaneously. Different bits may, for example, be transmitted in the data streams. The data streams may represent a transmission of information in different forms such as individual files, video, audio, or any form of data.

In another example, the signal path may carry multiple data streams, with the number of streams corresponding to the rank of the receiving device.

According to one example, the feature vector comprises values of features, the features comprising for each device of the set of devices a device related feature, the features further comprising per device and per frequency resource unit a channel related feature, wherein the device related feature comprises at least one of: a buffer status of the device or a past throughput of the device or a user pairing enabling metric, wherein the channel related feature of a device and a frequency resource unit comprises at least: a channel quality indicator (CQI) of a frequency channel to the device which is defined by the frequency resource unit. The past throughput may, for example, be a past average throughput. The past average throughput may, for example, be the average of throughput over a previous period of time. In one example, the past throughput may be normalized and thus provided as a normalized value such as within the range [0, 1].

For example, the device related feature may comprise the past average throughput ($l_j$) of the $j$-th device which may be given by $l_j = \dfrac{l'_j}{l_{max}}$, where $l_{max}$ is a stored maximum filtered throughput and $l'_j$ is the filtered throughput of the $j$-th device. Additionally, or alternatively, the device related feature may comprise the normalized buffer status ($b_j$) of the $j$-th device which may be defined as: $b_j = \dfrac{q_{max} - q_j}{q_{max}}$, where $q_{max}$ denotes the maximum packet size queued in the buffer of the $j$-th device and $q_j$ refers to the total packet size (physical data unit) queued in the buffer of the $j$-th device.

The channel related feature may, for example, comprise a normalized CQI value ($o_{i,j}$) of the $j$-th device and the $i$-th available frequency resource unit: $o_{i,j} = \dfrac{10\log(o'_{i,j})}{35}$, where $o'_{i,j}$ denotes the reported CQI value for downlink scheduling or estimated channel quality for uplink scheduling.

The user pairing enabling metric may be descriptive of the signal path. This may enable the feature vector to reflect or represent the signal path. The user pairing enabling metric for a given device may, for example, comprise a cross-correlation between the given device and other devices of the set of devices. The cross-correlation may measure how similar spatial channels of different devices are. For instance, for a given pair of devices, each device's signal may pass through distinct physical environments, leading to different spatial characteristics. The cross-correlation value between the two devices serves as a metric representing how distinct or independent their signals are from one another. The cross-correlation may be descriptive of the signal path for the following reason. In one signal path, the spatial separation (e.g., distance) between two devices may be high, resulting in low cross-correlation (ideal for pairing). However, in another signal path, these same devices may have channels with a higher cross-correlation, making them less ideal for pairing when communicating along that another signal path.

In another example, the user pairing enabling metric may comprise the signal-to-interference-plus-noise ratio (SINR). Indeed, devices with SINR greater than a threshold, e.g., the threshold may be -10dB, or within a predefined range e.g. [-10, 35] dB, may be paired because their signal strength has greater amplitude compared to the interference and noise, meaning they can tolerate sharing frequency resources with other devices. The SINR of the set of devices may also be descriptive of the signal path. For example, if a device has high SINR in one signal path but lower SINR in another signal path, the pairing in the first signal path may be higher (more favorable) than for the other signal path, since higher SINR may indicate better conditions for data transmission.

The machine learning model may learn from the values of the user pairing enabling metric which are obtained for the entire set of devices whether a device can be added to a signal path or if it should be assigned a separate signal path.

The present subject matter may enable obtaining the machine learning model using the second apparatus and the second method (being a training method). The second apparatus may be the first apparatus, meaning that the training and the inference of the machine learning model may be performed at the same apparatus. Alternatively, the second apparatus may not be the first apparatus. The first apparatus may be configured to access or receive the machine learning model from the second apparatus after the machine learning model has been trained.

In one example, the machine learning model may be a reinforcement learning agent as it is trained in accordance with reinforcement learning algorithm. The second apparatus may be configured to train the reinforcement learning agent in accordance with a reinforcement learning algorithm using as environment the wireless communication system. The training may be performed on a set of training steps that enable the reinforcement learning agent to converge on an optimal policy for resource allocation and scheduling decisions. The second apparatus may be configured to determine for (or define) each training set of the training steps: a time unit, a set of devices, a set of frequency resource units, and a signal path of signal paths for transmission in the time unit. The number of frequency resource units in the set of frequency resource units may be dependent on whether the single-feature vector approach or multi-feature vector approach is used. If the single-feature vector approach is used, the set of frequency resource units may be the (initial) set for frequency resource units determined as being available for the time unit. If the multi-feature vector approach is used, the set of frequency resource units may be a subset of the initial set for frequency resource units determined as being available for the time unit. In other words, the set of frequency resource units in the time unit may be what is referred to herein as involved frequency resource units. The set of devices may be schedulable devices for the time unit and the set of frequency resource units may be the involved frequency resource units. The time unit may also be associated with a specific number of signal paths. The second apparatus may be configured to use by the reinforcement learning agent a state defined by a feature vector descriptive of the set of devices, the set of frequency resource units and the signal path to perform an action, wherein the action comprises individual actions, wherein each individual action of the individual actions is defined by an assignment of a respective frequency resource unit of the set of frequency units. The second apparatus may be configured to determine a reward which is a combination of individual rewards of the individual actions respectively for adapting the reinforcement learning agent. For example, the reward is calculated, and based on this reward, it is determined whether the reinforcement learning agent has converged on an optimal policy. If the agent has converged, it may then be deployed to perform inference passes as described. If the agent has not yet converged, the reinforcement learning agent may be adapted and a next training step to be performed. The adaptation of the reinforcement learning agent may, for example, be performed by adjusting learnable parameters of the reinforcement learning agent. The learnable parameters of the reinforcement learning agent may be parameters of the reinforcement learning agent. The parameters may be variables that are learned from the training data. In case reinforcement learning agent comprises an actor network, the parameters may, for example, include weights and biases. The learnable parameters may, for example, be adjusted based on the gradients computed during backpropagation to optimize the policy loss function.

The individual action may, for example, be implemented as described with reference to the individual scheduling configuration. For example, the individual action may correspond to the individual scheduling configuration and the action may correspond to the scheduling decision obtained by using the individual scheduling configurations.

Hence, as described herein, a given time unit may encompass multiple training steps because each training step is defined by a feature vector, which is specified either per signal path or per subset of frequency resource units and signal path, with the time unit being associated with multiple signal paths. That is, within a single time unit, the reinforcement learning agent processes multiple feature vectors corresponding to different signal paths or subsets. After completing processing of all feature vectors involved for the time unit a next time unit (e.g., TTI) may be considered and so on.

The individual action for a given frequency resource unit may be performed based on the allocation probability distribution which was generated by the agent for that frequency resource unit. This distribution may allow the individual action to result in a fair assignment or allocation of the respective frequency resource unit from the set of available units. For example, each device in the set of devices is associated, within the allocation probability distribution, with a probability of being assigned a specific frequency resource unit. These probabilities, which form the allocation probability distribution, may represent the likelihood of each device being allocated the frequency resource unit. The individual action may involve selecting one device from the set of devices based on these probabilities, effectively making a probabilistic decision for resource assignment. This selection process may ensure that devices are assigned frequency resource units in a way that maximizes efficiency and fairness. Once the device is selected e.g., based on the highest probability, the specific frequency resource unit is allocated to that device.

If the machine learning model is composed of the first and second models as described in the dual model example, the inference passes in each training step may be performed according to that dual model example. Additionally, the agent's update may involve updating both the first and second models. This update may either use the same policy loss function for both models or distinct policy loss functions for each of the two models.

The training may be performed during real-time operation of the wireless communication system. The time units may correspond to the time units within the frames defined by the wireless communication system, where the reinforcement learning agent is continuously learning and adapting based on real-time data and feedback from the system's performance. In this case, each time unit provides the agent with new environmental states (e.g., current device demands, resource availability, and network conditions). Alternatively, the training may be performed offline in a simulated environment that mimics the wireless communication system. The simulation of the environment may be performed, for example, by a simulator designed to replicate the wireless communication system. In this scenario, the agent is trained using historical or synthetic data to ensure it converges on an optimal policy before being deployed in real-time operation. The rewards may, for example, be provided by the environment e.g., a base station, a network controller or the simulator.

Various reinforcement learning algorithms may be used to train the reinforcement learning agent. Some of these algorithms may incorporate one or more additional neural networks alongside the neural network of the reinforcement learning agent that is used to perform the inference passes, wherein the neural network that is used for the inference passes may be referred to as an actor network or policy network. For example, a reinforcement learning algorithm may be the Soft Actor-Critic (SAC) algorithm. Training with the SAC algorithm may involve not only the actor network (agent) but also two critic neural networks and two target neural networks. These four networks are utilized in each training step to obtain Q-values, which are used to evaluate a policy loss function that guides the training of the agent. After the training is successfully done, the reinforcement learning agent used to perform the inference passes may, for example, be provided as the trained actor network. The present subject matter may advantageously employ this algorithm by utilizing its distributional version and/or defining Q-values individually for one or more frequency resource units. These individual Q-values may then be combined, according to the present approach, to indirectly represent a Q-value for the entire action involving the full set of frequency resource units.

According to one example, the reinforcement learning agent comprises a neural network, which may be referred to as an actor network or policy network. The reinforcement learning algorithm is a SAC algorithm, wherein the reinforcement learning agent is adapted in each training step using a policy loss function, wherein the policy loss function is defined using for each action-state pair a coefficient-wise minimum of a first Q-value vector having an element per individual action and a second Q-value vector having an element per individual action.

Alternatively, according to one example, the reinforcement learning agent comprises a neural network, which may be referred to as an actor network or policy network. The reinforcement learning algorithm is a SAC algorithm, wherein critic and target networks involved in the SAC algorithm are distributional networks, wherein each network of the critic and target networks is configured to output for an input action and state pair a quantile distribution (e.g., a quantile distribution over possible rewards), wherein the reinforcement learning agent is adapted in each training step using a policy loss function, wherein the policy loss function is defined using for each action-state pair a coefficient-wise minimum of a first Q-value vector having an element per individual action and a second Q-value vector having an element per individual action, wherein each element of the first Q-value vector is a combination of quantiles which are obtained for the associated individual action and the state by one of the critic networks, wherein each element of the second Q-value vector is a combination of quantiles which are obtained for the associated individual action and the state by the other critic network.

The alternative example may be described as follows. The reinforcement learning agent comprises a neural network, which may be capable of learning complex patterns from data and making decisions based on those patterns. The critic networks, as well as the target networks, are distributional, meaning they may predict distributions over future rewards rather than just single expected values. Each network of the critic and target networks is configured to output for an input action and state pair a quantile distribution over possible rewards, allowing the second apparatus to account for the full range of potential outcomes. The reinforcement learning agent is adapted in each training step using the policy loss function, which measures how well the agent's decision-making strategy is performing and guides its updates. The policy loss function is defined using, for each action-state pair, a coefficient-wise minimum of a first Q-value vector having an element per individual action and a second Q-value vector having an element per individual action. Each element of the first Q-value vector is a combination of quantiles which are obtained for the associated individual action and state by one of the critic networks. Similarly, each element of the second Q-value vector is a combination of quantiles obtained for the same action and state by the other critic network.

These distributional networks, which capture a wider range of possible outcomes through quantile-based outputs, may enable the agent to better manage uncertainty and variability in rewards. Additionally, the introduction of quantile outputs for critic networks, potentially combined with action masking for maximum entropy learning, may allow the training phase to leverage more computationally advanced techniques to enhance decision-making accuracy while keeping real-time inference lightweight. Since the distributional output may be applied only at the critic/target network level, the inference speed required for real-time applications may remain unaffected. This careful balance between more sophisticated training processes and optimized real-time execution may enable efficient resource allocation in high-demand environments. However, since output layers of the critic networks are distributional per action, and the agent is not, the present training method may, for example, first compute the average output for each individual action over all quantiles and this way squeeze quantile outputs of all individual actions in the format of policy network's probability distribution output, where there is a single probability value per individual action. And since there are two critic networks, the coefficient-wise minimum of averaged two squeezed Q-value vectors is performed.

According to one example, the individual reward of a given individual action on an associated specific frequency resource unit is a combination of a first value and a second value of a performance metric. The first value is evaluated for the given individual action and the second value is evaluated for a previous individual action on the specific frequency unit.

This example may provide a reward calculation process where the individual reward for a specific individual action on a given frequency resource unit is derived from two performance metric values. The first value is associated with the performance of the current individual action, while the second value is linked to the performance of a previous action on the same frequency resource unit. This approach may compare the effectiveness of the current action relative to a past action on that specific resource, taking both the current and historical performance into account when determining the reward. This may provide a more dynamic and context-aware reward mechanism by incorporating historical performance data.

A reward function may be used to evaluate the reward. An example reward function may be defined as follows in case the transmissions during the training are performed according to MU-MIMO technique for multiple UEs. The reward function may maximize the expected sum of increase in the MU-MIMO proportional fairness metric. The same model is used for all MU-MIMO layers. Hence, it takes actions that, on average, may increase the MU-MIMO proportional fairness metric and outperform earlier schedulers. Rewards may be calculated for each RBG separately, the RBG being a frequency resource unit example. Because a single forward propagation provides multiple individual actions (one for each RBG output block), a single reward for the overall action (all the individual actions) may be quite noisy for an individual action. Therefore, an individual reward ($r_{i,t,RBG}$) for allocating the RBG block to the $i$-th UE may be defined as follows:

$$r_{i,l,RBG} = \frac{t_{i,l,RBG}}{P_i} - \frac{t_{i,l-1,RBG}}{P_i}$$ , where $P_i$ is the past average throughput of the $i$-th UE, $t_{i,l,RBG}$ is sum throughput estimate over all UEs for the current layer $l$ being scheduled and $t_{i,l-1,RBG}$ is the sum throughput estimate of the previously scheduled layer. To avoid the degenerate case wherein the agent may learn to minimize the past average throughput to obtain high rewards, a technique used herein may be the normalization of the individual reward for every TTI. Therefore, the individual reward used for training may be replaced by normalized reward as follows:

$$r_{i,l,RBG} \leftarrow \begin{cases} \max\left(\frac{r_{i,l,RBG}}{\max\limits_{i} r_{i,l,RBG}}, -1\right), \text{if } \max\limits_{i} r_{i,l,RBG} > 0 \\ 1, \text{ if } \max\limits_{i} r_{i,l,RBG} \leq 0 \text{ and empty allocation selected'} \\ -1, \text{ else} \end{cases}$$

where maximum reward is forced to 1 and minimum is clipped to -1, where $\max\limits_{i} r_{i,l,RBG}$ represents the highest individual reward for assigning that RBG to one of the UEs for the current layer $l$.

The reward may be utilized during training in accordance with the SAC algorithm or any other training algorithm for training the agent. When using the SAC algorithm, the reward may be applied to evaluate loss functions involved in the training process, as exemplified in the following.

The critic networks involved in the SAC algorithm may be updated during the training in accordance with a critic loss function. The critic loss function may be adapted to the distributional nature of the critic networks. For that, the critic loss function may be provided, for example, as Quantile Huber loss function, which is obtained by an adaptation of the Hubber loss function to the current distributional nature of the critic networks. Indeed, the basic Huber loss function may be

$$L(u) = \begin{cases} 0.5u^2 \\ k(|u| - 0.5k) \end{cases}$$ , where k is a hyper parameter typically set as 1. Then the quantile Huber loss function may be the asymmetric variant of the Huber loss, $\rho_\tau^k(u) = \left|\tau - \delta_{\{u<0\}}\right| L(u)$ , where $\tau$ is for each quantile of $R$ quantiles

is $\tau_i = \frac{i}{R}$ , for $i = 1, \ldots, R$. The quantile Huber loss function may create a number $R$ of percentiles per individual action to the output layers of critic networks. Hence, in case of SAC algorithm with the present discrete modification, the error $u_t$ for all $i = 1, \ldots, R$ quantiles in the quantile Huber loss function may be: i$u_{i,t} = Q_i(s_t, a_t) - \gamma r(s_t, a_t) \pi'(s'_t, a'_t) * (Q'(s'_t, a') - \alpha * log(\pi'(s'_t, a'_t)))$, where $\gamma$ is learning rate, $r$ is reward, $\alpha$ is learned entropy regularization coefficient, and $\pi$ is the action's probability in state $s_t$ given by the policy of the agent. $Q_i$ is the quantile output for the $i$-th quantile for the action and state of the critic network. $Q'$ is the target $Q'$ taken by averaging over all quantiles in next state $s'$ for action $a'$ from critic target output. For example, the action $a'$ for the next state $s'$ (for target values of $\pi'$ and $Q'$s) may be drawn from probability distribution given by the policy network.

Since output layers of the critic networks are distributional per action, the agent may first compute the average output for each individual action over all R quantiles and this way squeeze quantile outputs of all individual actions in the format of policy network's probability distribution output, where there is a single probability value per individual action. And since there are two critic networks, the coefficient-wise minimum of averaged two squeezed Q-value vectors is performed. After obtaining policy probability distribution vector for a state $s_t$ and creating Q-value vector for the same state $s_t$, the agent may be trained with loss vector obtained with coefficient-wise array operations. Specifically, the policy loss function may be defined as follows: $L_{policy} = \pi(s_t)(Q(s_t) - \alpha \log(\pi(s_t)))$, where $\pi(s_t)$ is probabilities of actions in state $s_t$ and $Q(s_t)$ is Q-value vector at state $s_t$. The term $\alpha \log(\pi(s_t))$ represents the entropy term, and $\alpha$ is an entropy regularization parameter for controlling a trade-off between exploration (higher entropy) and exploitation (maximizing return). Although the Q-value vectors are obtained, and their corresponding networks are adapted, for each individual action, the policy network is trained for all individual actions at state $s_t$. This way the policy leverages the whole Q-value distribution, which may help learning faster and maximize entropy better. The output of the policy network may be converted to a probability distribution with the softmax function. Individual action selection may be based on weighted random pick (from policy's output) that uses individual action probabilities as weights.

The present subject matter may provide the policy loss function with an optimal value for the entropy regularization parameter $\alpha$. Specifically, the value of the entropy regularization parameter $\alpha$ may be learned dynamically during the training. For that, the gradient $d\alpha$ of the entropy regularization parameter may be defined as follows: $d\alpha = -\pi * (\log(\pi) + H)$, where $H$ is a target entropy. In one example, a predefined value for target entropy $H$ may be defined as 0.98. In another example, the target entropy $H$ may be recalculated for each state $s_t$ because the number of valid actions may vary. For example in case an action space varies based on number of valid UEs to be scheduled, the target entropy $H$ may be repeatedly recalculated based on the number of valid actions in state to cause the target entropy $H$ to converge towards optimal average entropy as follows: $H(s_t) = 0.98(-log(\frac{1}{|A(s_t)|})$ , where $|A(s_t)|$ may represent the action space.

This recalculation may thus adjust the target entropy based on the size of the action space $|A(e_t)|$, ensuring that the entropy scales appropriately in cases where action masks invalidate certain actions. The entropy regularization parameter $\alpha$ may thus be tuned with gradient descent by taking mean over all actions as follows $\alpha \leftarrow \alpha - \frac{1}{|A(s_t)|}\sum_i^{|A(s_t)|}(\pi(s_t) * (\log(\pi_i(s_t)) - H(s_t)))$ , where *log* denotes element-wise natural logarithm of the probability distribution of the discrete action space, and the sum $\Sigma$ refers to the aggregation of the gradient $d\alpha$ across all actions in the action space. For example, the action masks may be stored in the replay memory, allowing the number of valid actions to be retrieved from the replay memory for training purposes as well. Since the actor network generates probabilities for each action, but some actions may be invalidated by the output mask, the probability distribution may be adjusted by setting the probabilities of invalid actions to zero. The probabilities of valid actions may then be increased by a constant to ensure the total sum of probabilities equals 1, as required for softmax output.

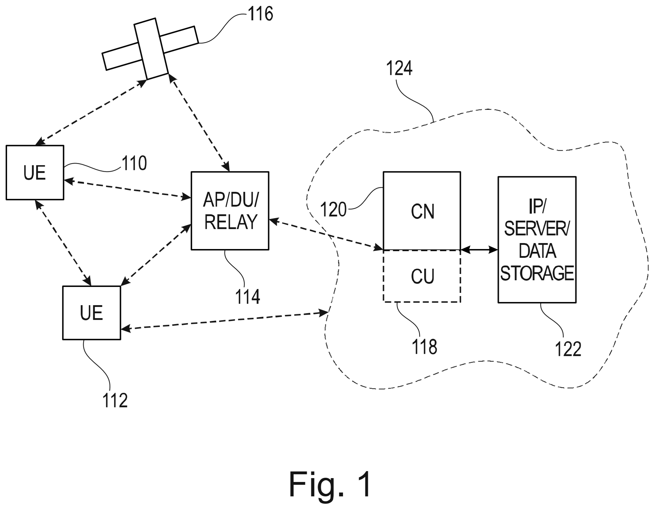

**FIG. 1** is a block diagram illustrating an example radio access network in accordance with an example of the present subject matter. FIG. 1 illustrates examples of simplified system architectures only showing some elements and functional entities, all being logical units, whose implementation may differ from what is shown. The connections illustrated in FIG.1 are logical connections; the actual physical connections may be different. It is apparent to a person skilled in the art that the system typically comprises also other functions and structures than those illustrated in FIG.1.

The embodiments are not, however, restricted to the system given as an example but a person skilled in the art may apply the solution to other communication systems provided with necessary properties.

The example radio access network illustrated in FIG.1 includes devices 110 and 112. The devices 110 and 112 may, for example, be user devices. The devices 110 and 112 are configured to be in a wireless connection on one or more communication channels with a node 114. The node 114 is further connected to a core network 120. In one example, the node 114 may be an access node (such as (e/g)NodeB) 114 providing or serving devices in a cell. In one example, the node 114 may be a non-3GPP access node. The physical link from a device to a (e/g)NodeB is called uplink or reverse link and the physical link from the (e/g)NodeB to the device is called downlink or forward link. It should be appreciated that (e/g) NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signaling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to devices. The antenna unit may comprise a plurality of antennas or antenna elements. The (e/g)NodeB is further connected to the core network 120 (CN or next generation core NGC). For example, the (e/g)NodeB may connect to an access and mobility management function (AMF) and user plane function (UPF) in the control plane and user plane, respectively. Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in IoT network which is a scenario in which objects are provided with the ability to transfer data over a network without requiring human-to-human or human-to-computer interaction, e.g., to be used in smart power grids and connected vehicles. The device may also utilize cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment just to mention but a few names or apparatuses.

Various techniques described herein may also be applied to a cyber-physical system (CPS) (a system of collaborating computational elements controlling physical entities). CPS may enable the implementation and exploitation of massive amounts of interconnected ICT devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals.

Additionally, although the apparatuses have been depicted as single entities, different units, processors and/or memory units (not all illustrated in FIG. 1) may be implemented.

5G enables using MIMO antennas, many more base stations or nodes than an existing LTE system (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require bringing the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. The MEC structure also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, IoT (massive connectivity and/or latency critical), critical communications (autonomous vehicles, traffic safety, real-time analytics, time-critical control, healthcare applications).

The communication system is also able to communicate with other networks, such as a public switched telephone network or the Internet as illustrated by the component referenced by reference numeral 122, or utilize services provided by them. The communication network may also be able to support the usage of cloud services, for example at least part of core network operations may be carried out as a cloud service (this is illustrated in FIG.1 using "cloud" 124).

The communication system may also comprise a central control entity, or a like, providing facilities for networks of different operators to cooperate for example in spectrum sharing.

The technology of edge cloud may be brought into a radio access network (RAN) by utilizing network function virtualization (NFV) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit (DU)) and non-real time functions being carried out in a centralized manner (in a centralized unit, CU 118).

It should also be understood that the distribution of labor between core network operations and base station operations may differ from that of the LTE or even be non-existent. Some other technology advancements probably to be used are Big Data and all-IP, which may change the way networks are being constructed and managed. 5G is being designed to support multiple hierarchies, where MEC servers can be placed between the core and the base station or nodeB (NB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilize geostationary earth orbit (GEO) satellite systems, but also low earth orbit (LEO) satellite systems, in particular mega-constellations (systems in which hundreds of (nano)satellites are deployed). Each satellite 116 in the mega-constellation may cover several satellite-enabled network entities that create on-ground cells. The on-ground cells may be created via an on-ground relay node 114 or by a gNB located on-ground or in a satellite.

It is understandable for a person skilled in the art that the depicted system is only an example of a part of a radio access system and in practice, the system may comprise a plurality of (e/g)NBs, the device may have an access to a plurality of radio cells and the system may comprise also other apparatuses, such as physical layer relay nodes or other network elements, etc. One of the (e/g)NBs may be a Home(e/g)NB (H(e/g)NBs). Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NBs of FIG.1 may provide any kind of these cells. A cellular radio system may be implemented as a multilayer network including several kinds of cells. Typically, in multilayer networks, one access node provides one kind of a cell or cells, and thus a plurality of (e/g)NBs are required to provide such a network structure.

For fulfilling the need for improving the deployment and performance of communication systems, the concept of "plug-and-play" (e/g)NBs has been introduced. Typically, a network which is able to use "plug-and-play" (e/g)NBs, includes, in addition to H(e/g)NBs, a home nodeB gateway, or HNB-GW (not illustrated in FIG.1). A HNB-GW, which is typically installed within an operator's network, may aggregate traffic from a large number of HNBs back to a core network.

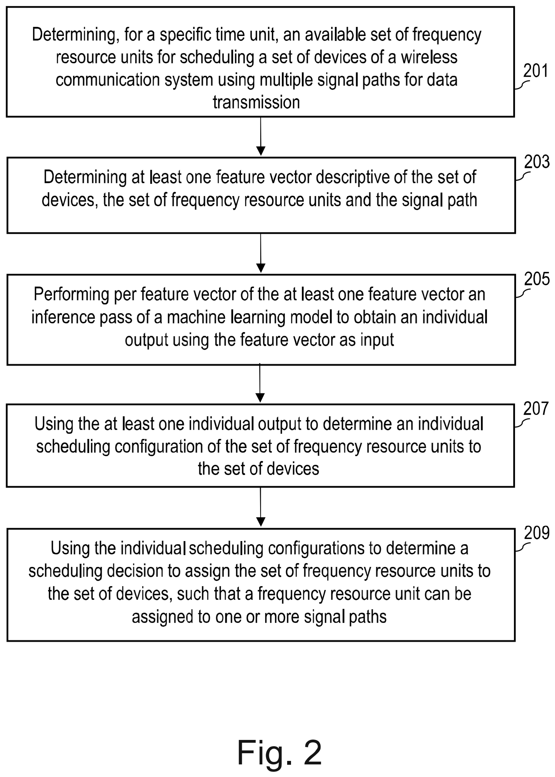

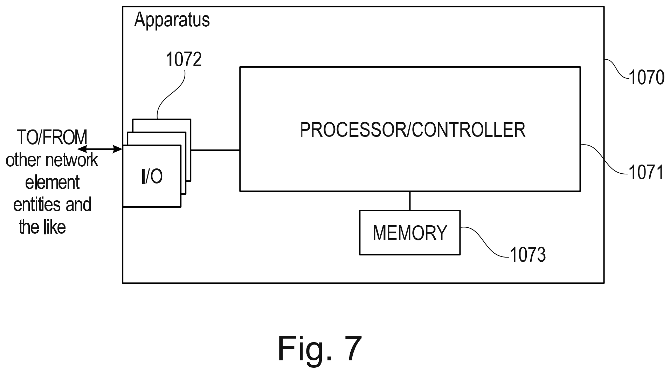

FIG. 2 is a process flowchart illustrating a method according to an example of the present subject matter. For the purpose of explanation, the method described in reference to FIG. 2 may be implemented in an apparatus such as the node 114 illustrated and described in reference to FIG. 1 or apparatus illustrated and described in reference to FIG. 7 but is not limited to this implementation.

At block 201, the apparatus may determine, for a specific time unit, an available set of frequency resource units for scheduling a set of devices of a wireless communication system using multiple signal paths for data transmission.

For each signal path of the signal paths, the apparatus may perform operations of blocks 203 through 207. At block 203, the apparatus may determine at least one feature vector descriptive of the set of devices, the set of frequency resource units and the signal path. At block 205, the apparatus may perform per feature vector of the at least one feature vector an inference pass of a machine learning model to obtain an individual output using the feature vector as input. At block 207, the apparatus may use the at least one individual output to determine an individual scheduling configuration of the set of frequency resource units to the set of devices.

This may result in one individual scheduling configuration per signal path of the signal paths.

At block 209, the apparatus may use the individual scheduling configurations to determine a scheduling decision to assign the set of frequency resource units to the set of devices, such that a frequency resource unit can be assigned to one or more signal paths.

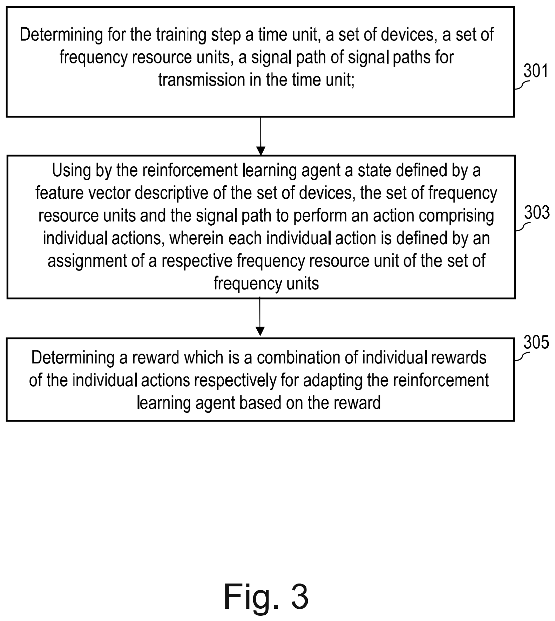

FIG. 3 is a process flowchart illustrating a training method for training a reinforcement learning agent using a reinforcement learning algorithm using as environment a wireless communication system according to an example of the present subject matter. For the purpose of explanation, the method described in reference to FIG. 3 may be implemented in an apparatus such as the node 114 illustrated and described in reference to FIG. 1 or apparatus illustrated and described in reference to FIG. 7 but is not limited to this implementation.

The apparatus may be configured to perform operations of blocks 301 through 305 for each training step of a set of training steps.

The apparatus may determine at block 301 for the training step a time unit, a set of devices, a set of frequency resource units, a signal path of signal paths for transmission in the time unit.

At block 303, the apparatus may use by the reinforcement learning agent a state defined by a feature vector descriptive of the set of devices, the set of frequency resource units and the signal path in order to perform an action comprising individual actions, wherein each individual action is defined by an assignment of a respective frequency resource unit of the set of frequency units.

The apparatus may determine at block 305 a reward which is a combination of individual rewards of the individual actions respectively for adapting the reinforcement learning agent based on the reward.

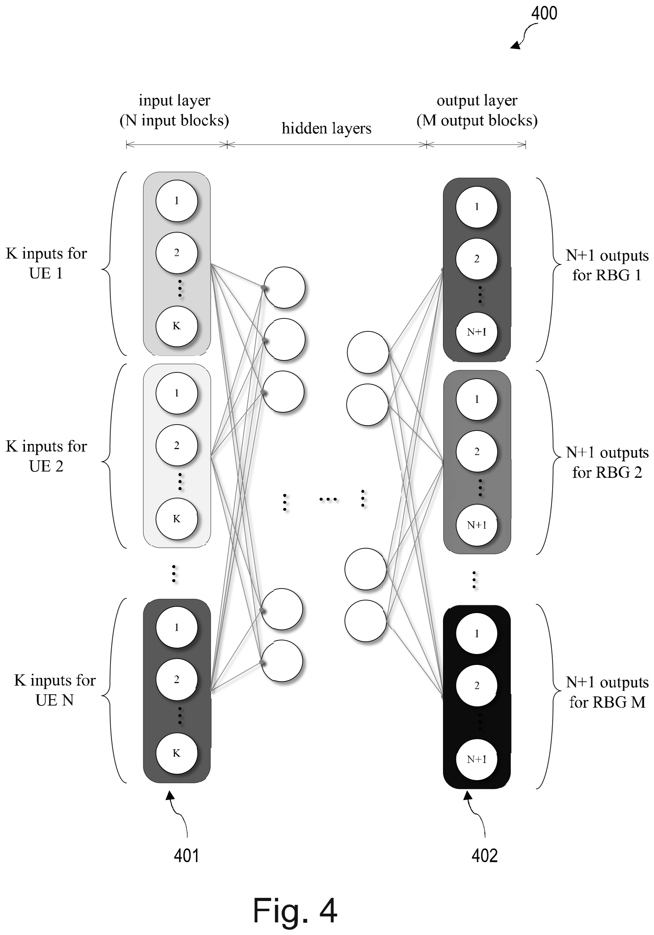

**FIG. 4** is a diagram illustrating an example machine learning model in accordance with an example of the present subject matter.

The diagram represents the structure of a neural network (e.g., deep neural network) 400 which may be used for scheduling UEs in an RBG allocation process. The diagram illustrates how multiple inputs from the UEs are processed through layers of the neural network 400 to generate outputs for corresponding RBGs. The neural network 400 comprises an input layer 401. The input layer 401 is composed of N input blocks, where each block corresponds to a different UE. The N input blocks may provide an example for the feature vector. For each UE (e.g., UE 1, UE 2, up to UE N), a feature set is provided with K inputs that represent the features of the UE, such as channel quality, demand, or other relevant metrics used for scheduling decisions. These input blocks are fed into the neural network 400 to be processed. The input blocks are connected to several hidden layers in the center, where the data from the input layer 401 is processed through multiple layers of neurons. The neurons within each hidden layer are connected to the next layer, allowing the neural network 400 to learn patterns and make scheduling decisions. The neural network 400 comprises an output layer 402. The output layer 402 is composed of M output blocks, each corresponding to an RBG. Each output block provides N+1 outputs, which represent the allocation probability distribution for a specific RBG (e.g., RBG 1, RBG 2, up to RBG M). The N+1 outputs may allow to make detailed decisions for each RBG, considering the scheduling needs and resource constraints of the UEs. Indeed, each UE has K inputs, representing the feature set for that specific UE, and for each RBG, the network generates N+1 outputs, where each output corresponds to a UE and its respective probability, accounting for the possibility of not scheduling a UE in a given RBG, as indicated by the additional 1 (in N+1). The additional one indicates that a null space may be needed to allocate no users to an RBG. This may, for example, mean that the resource allocation for the RBG is skipped.

For example, during training, the input feature sets may be shuffled to improve model generalization and reduce bias. Although output blocks for each potential RBG and signal path e.g., MU-MIMO user layer, may be included, the best trade-off between performance and execution time may be achieved with per RBG output blocks only. Extending the output layer to cover all MU-MIMO user layers may significantly increase its size and may prevent the use of inputs like maximum precoder cross correlation, as the UEs scheduled for certain RBGs may be unknown. Maximum precoder cross correlation may be used as an input feature because cross correlations between scheduling candidates are pre-calculated, allowing the identification of the maximum correlation between two UEs already scheduled or being scheduled for an RBG.

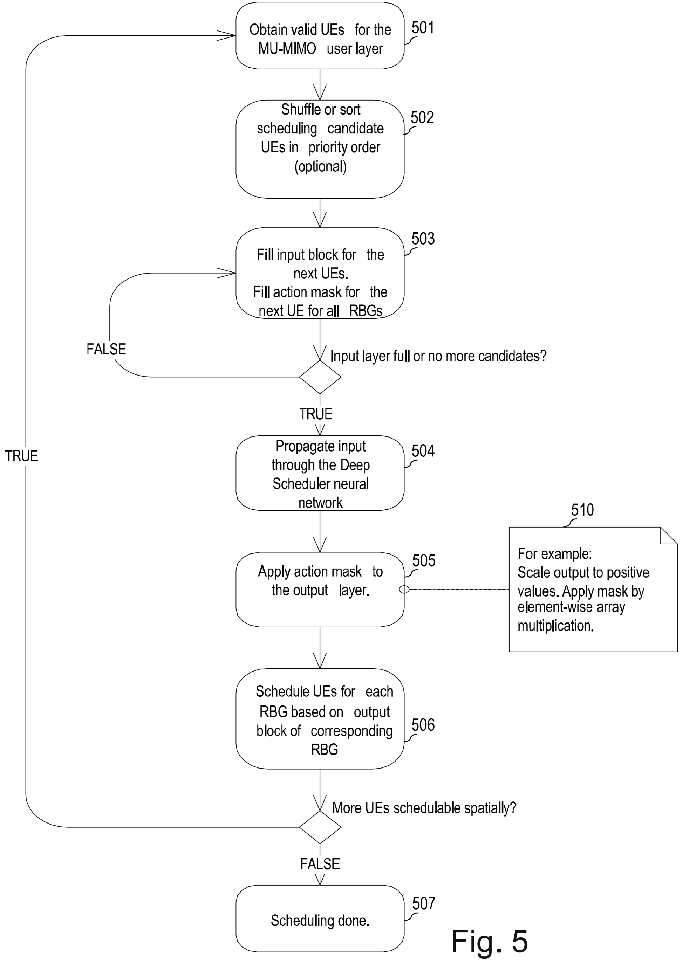

**FIG. 5** is a process flowchart illustrating a scheduling method according to an example of the present subject matter. For the purpose of explanation, the method described in reference to FIG. 5 may be implemented in an apparatus such as the node 114 illustrated and described in reference to FIG. 1 or apparatus illustrated and described in reference to FIG. 7 but is not limited to this implementation.

The process begins by the apparatus obtaining a set of UEs (which may be referred to as valid UEs) for the MU-MIMO user layer at block 501. Next, the apparatus may shuffle or sort the set of UEs in priority order at block 502, which is an optional operation to organize UEs for scheduling. The shuffling may, for example, be performed as follows. The set of UEs may be shuffled to maximize UE variation for different MU-MIMO user layers. Alternatively, the set of UEs may be sorted based on their QoS priority, at least for one MU-MIMO user layer, to ensure that prioritized UEs are considered by a machine learning model such as the neural network of FIG. 4. Other sorting metrics may also be applied, such as the highest proportional fair metric or the lowest spatial cross-correlation of UEs compared to already scheduled UEs.

The apparatus then proceeds to block 503 to fill the input block for the next UEs and fill the action mask for the next UE for all RBGs. The action mask may be generated in parallel for the corresponding MU-MIMO user layer, so that if certain RBGs have already been allocated to the UE (from previous MU-MIMO user layer scheduling), the UE may be masked away from the output layer using the action mask. If the input layer is not full, the apparatus returns to block 503. If the input layer is full or no more candidates exist, the input is propagated by the apparatus through the neural network at block 504. The apparatus may then apply the action mask to the output layer at block 505. For example, the action mask may include a single value per output layer, where the values are either zero or one. This may allow all neural network output values to be scaled to positive values, and element-wise array multiplication is applied to the output layer and the mask (as indicated in block 510). Once an output is masked, the individual action for each RBG may be obtained from the corresponding output block with a block-specific argmax (the softmax function may be used instead of argmax, e.g., during training, to maximize entropy learning). The apparatus proceeds to schedule UEs at block 506 for each RBG based on the output block of the corresponding RBG. A check is then performed to determine if there are more UEs schedulable spatially; if so, the apparatus returns to block 503. If no more UEs can be scheduled, the scheduling is done at block 507 by the apparatus, and the process is complete.

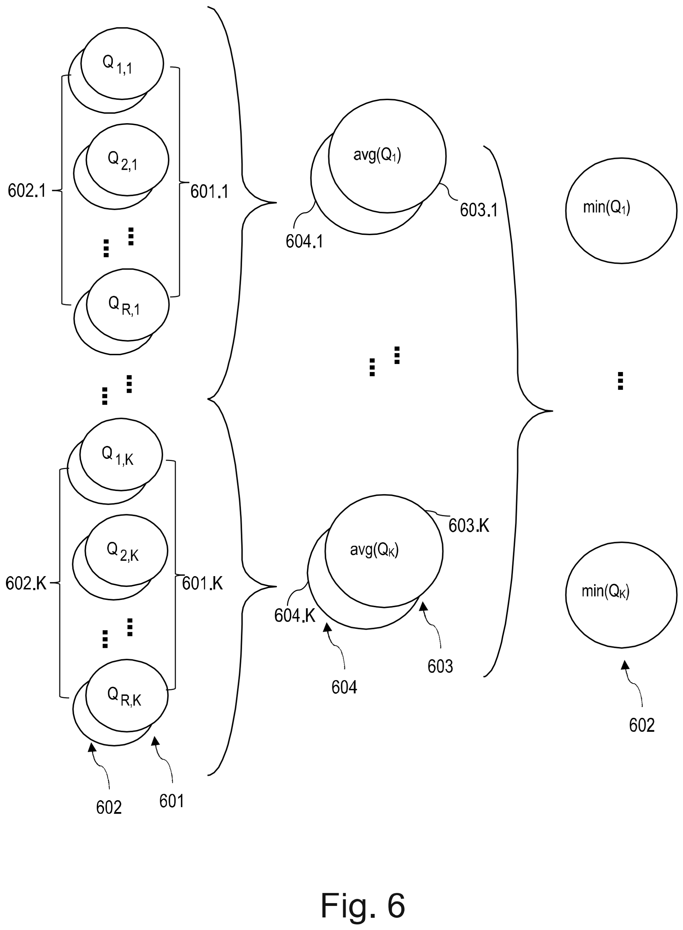

**FIG. 6** is a diagram illustrating a process of obtaining Q-value vectors for evaluating a policy loss function for training the reinforcement learning agent according to an example of the present subject matter. For the purpose of explanation, the method described in reference to FIG. 6 may be implemented in an apparatus such as the node 114 illustrated and described in reference to FIG. 1 or apparatus illustrated and described in reference to FIG. 7 but is not limited to this implementation.

The Q-value vectors are described as being obtained during the training (e.g., in one training step) of the reinforcement learning agent using the SAC algorithm, with particular emphasis on how critic networks outputs are processed to address the overestimation problem in reinforcement learning. The number of RBGs considered in this is example is K RBGs.

The diagram illustrates the outputs 601 and 602 of two critic networks which are used for the SAC based training. The output of the critic network 601 comprises a number K of sets of R quantiles 601.1 through 601.K associated with the K RBGs respectively. Similarly, the output of the critic network 601 comprises a number K of sets of R quantiles 602.1 through 602.K associated with the K RBGs respectively. This may provide R quantiles per individual action of the agent.

The diagram further illustrates the process of averaging the quantiles for each individual action across all critic outputs 601 and 602. The averaging may be performed as follows. For each $i$-th RBG of the $K$ RBGs, the $i$-th set of quantiles 601.i of the critic network 601 may be combined by averaging, into a single $i$-th Q-value 603.i (also referred to as avg(Qi)). This may result in a first Q-value vector 603. Similarly, for each $i$-th RBG of the K RBGs, the $i$-th set of quantiles 602.i of the other critic network 602 may be combined by averaging, into a single $i$-th Q-value 604.i. This may result in a second Q-value vector 604.

The averaged Q values from the two critic networks may be processed by taking the coefficient-wise minimum of the two Q-value vectors 603 and 604. This may minimize the risk of overestimation, which may be a common issue in Q-learning algorithms. For example, for each $i$-th RBG of the K RBGs, the $i$-th element of the first Q-value vector 603 may be compared with the $i$-th element of the second Q-value vector 604 to obtain the $i$-th minimum Q-value 605.i (also referred to as min(Qi)). This may result in a final Q-value vector 605 that may be used in the policy loss function for the update of the agent.

In **FIG. 7,** a block circuit diagram illustrating a configuration of an apparatus 1070 is shown, wherein the apparatus 1070 is configured to implement at least part of the present subject matter. It is to be noted that the apparatus 1070 illustrated in FIG. 7 may comprise several further elements or functions besides those described herein below, which are omitted herein for the sake of simplicity as they are not essential for the understanding. Furthermore, the apparatus may be also another device having a similar function, such as a chipset, a chip, a module, etc., which can also be part of an apparatus or attached as a separate element to the apparatus 1070, or the like. The apparatus 1070 may comprise a processing function or processor 1071, such as a central processing unit (CPU) or the like, which executes instructions given by programs or the like related to a flow control mechanism. The processor 1071 may comprise one or more processing portions dedicated to specific processing as described below, or the processing may be run in a single processor. Portions for executing such specific processing may be also provided as discrete elements or within one or more further processors or processing portions, such as in one physical processor like a CPU or in several physical entities, for example.

Reference sign 1072 denotes transceiver or input/output (I/O) units (interfaces) connected to the processor 1071. The I/O units 1072 may be used for communicating with one or more other network elements, entities, terminals or the like. The I/O units 1072 may be a combined unit comprising communication equipment towards several network elements or may comprise a distributed structure with a plurality of different interfaces for different network elements. Reference sign 1073 denotes a memory usable, for example, for storing data and programs to be executed by the processor 1071 and/or as a working storage of the processor 1071.

The processor 1071 is configured to execute processing related to the subject matter described throughout this disclosure. In particular, the apparatus 1070 may be configured to perform the method as described in reference to FIG. 2, 3, 5 or 6.

For example, the processor 1071 is configured for: determining, for a specific time unit, an available set of frequency resource units for scheduling a set of devices of a wireless communication system using multiple signal paths for data transmission; for each signal path of the signal paths, determine at least one feature vector descriptive of the set of devices, the set of frequency resource units and the signal path, perform per feature vector of the at least one feature vector an inference pass of a reinforcement machine learning agent model to obtain an individual output using the feature vector as input, and use the at least one individual output to determine an individual scheduling configuration of the set of frequency resource units to the set of devices; using the individual scheduling configurations to determine a scheduling decision to assign the set of frequency resource units to the set of devices, such that a frequency resource unit can be assigned to one or more signal paths.

In another example, the processor 1071 is configured for: determine for a training step a time unit, a set of devices, a set of frequency resource units, a signal path of signal paths for transmission in the time unit; use by a reinforcement learning agent a state defined by a feature vector descriptive of the set of devices, the set of frequency resource units and the signal path to perform an action comprising individual actions, wherein each individual action is defined by an assignment of a respective frequency resource unit of the set of frequency units, and determine a reward which is a combination of individual rewards of the individual actions respectively for adapting the reinforcement learning agent based on the reward.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable storage medium. A 'computer-readable storage medium' as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the processor of the computing device.

'Computer memory' or 'memory' is an example of a computer-readable storage medium. Computer memory is any memory which is directly accessible to a processor. 'Computer storage' or 'storage' is a further example of a computer-readable storage medium. Computer storage is any non-volatile computer-readable storage medium. In some embodiments computer storage may also be computer memory or vice versa.

A 'processor' as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer system or distributed amongst multiple computer systems. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances the computer executable code may be in the form of a high level language or in a pre-compiled form and be used in conjunction with an interpreter which generates the machine executable instructions on the fly.

Generally, the program instructions can be executed on one processor or on several processors. In the case of multiple processors, they can be distributed over several different entities. Each processor could execute a portion of the instructions intended for that entity. Thus, when referring to a system or process involving multiple entities, the computer program or program instructions are understood to be adapted to be executed by a processor associated or related to the respective entity.

**Claims**

1. An apparatus for a wireless communication system, the apparatus comprising at least one processor; and at least one memory storing instructions that, when executed by the at least one processor, cause the apparatus to:

   determine (201), for a specific time unit, an available set of frequency resource units for scheduling a set of devices of the wireless communication system using multiple signal paths for data transmission;
   for each signal path of the signal paths, determine (203) at least one feature vector descriptive of the set of devices, the set of frequency resource units and the signal path, perform per feature vector of the at least one feature vector an inference pass of a machine learning model to obtain an individual output using the feature vector as input, and use the at least one individual output to determine an individual scheduling configuration of the set of frequency resource units to the set of devices, wherein determine the individual scheduling configuration for a current inference pass is by further using the one or more individual scheduling configurations of one or more previous inference passes respectively, and wherein determine the individual scheduling configuration is such that it excludes previous assignments of devices to frequency resource units in the one or more previous inference passes;

use (209) the individual scheduling configurations to determine a scheduling decision to assign the set of frequency resource units to the set of devices, such that a frequency resource unit can be assigned to one or more signal paths.

2. The apparatus of any of the preceding claims, wherein the machine learning model comprises a first model and a second model, the first model being configured to perform the one or more inference passes corresponding to a first signal path of the signal paths and the second model is configured to perform the remaining inference passes.

3. The apparatus of any of the preceding claims, wherein the one or more inference passes corresponding to the first signal path are performed without user pairing, wherein the remaining inference passes are performed with user pairing.

4. The apparatus of any of the preceding claims, wherein the machine learning model comprises a neural network, the neural network comprises an input layer comprising an input block per device of the set of devices, wherein execution of the instructions further causes the apparatus to determine an input vector per device of the set of devices, the input vector being descriptive of the device and the set of frequency resource units, wherein execution of the instructions further causes the apparatus to determine the feature vector by including in a specific arrangement the input vectors within the feature vector, wherein the specific arrangement is descriptive of the signal path.

5. The apparatus of claim 4, the specific arrangement of the input vectors being a random arrangement of the input vectors.

6. The apparatus of claim 4, wherein execution of the instructions further causes the apparatus to sort the set of devices in accordance with a device metric, wherein the specific arrangement of the input vectors is provided according to the sorting.

7. The apparatus of claim 6, the device metric being at least one of: quality of service (QoS), proportional fair metric or lowest spatial cross correlation of the device.

8. The apparatus of any of the preceding claims, wherein execution of the instructions further causes the apparatus to determine the scheduling decision in accordance with a multi-user multiple input, multiple output (MU-MIMO) technique, wherein the signal paths represent the MU-MIMO user layers respectively.

9. The apparatus of any of the preceding claims, wherein the machine learning model comprises a neural network, the neural network comprising an output layer whose dimension is equal to the number of the set of frequency resource units multiplied by the number of the set of devices plus one.

10. The apparatus of any of the preceding claims, wherein the signal paths represent respectively data streams for transmission to the set of devices.

11. The apparatus of any of the preceding claims, the feature vector comprising values of features, the features comprising for each device of the set of devices a device related feature, the features further comprising per device and per frequency resource unit a channel related feature, wherein the device related feature comprises at least one of: a buffer status of the device or a past throughput of the device or a user pairing enabling metric, wherein the channel related feature of a device and a frequency resource unit comprises at least: a channel quality indicator (CQI) of a frequency channel to the device which is defined by the frequency resource unit.

12. A method comprising:

determining (201), for a specific time unit, an available set of frequency resource units for scheduling a set of devices of a wireless communication system using multiple signal paths for data transmission;
for each signal path of the signal paths, determining (203) at least one feature vector descriptive of the set of devices, the set of frequency resource units and the signal path, performing per feature vector of the at least one feature vector an inference pass of a machine learning model to obtain an individual output using the feature vector as input, and using the at least one individual output to determine an individual scheduling configuration of the set of frequency resource units to the set of devices, wherein determining the individual scheduling configuration for a current inference pass is by further using the one or more individual scheduling configurations of one or more previous inference passes respectively, and wherein determining the individual scheduling configuration is such that it excludes previous assignments of devices to frequency resource units in the one or more previous inference passes;

using (209) the individual scheduling configurations to determine a scheduling decision to assign the set of frequency resource units to the set of devices, such that a frequency resource unit can be assigned to one or more signal paths.

13. A computer program product comprising processor executable instructions for causing an apparatus for performing the method of claim 12.

14. The apparatus of any of claims 1-11, wherein the apparatus is for training a reinforcement learning agent in accordance with a reinforcement learning algorithm using as environment a wireless communication system, and wherein execution of the instructions further causes the apparatus in each training step to:

determine (301) for the training step a time unit, a set of devices, a set of frequency resource units, a signal path of signal paths for transmission in the time unit;

use (303) by the reinforcement learning agent a state defined by a feature vector descriptive of the set of devices, the set of frequency resource units and the signal path to perform an action comprising individual actions, wherein each individual action is defined by an assignment of a respective frequency resource unit of the set of frequency units, and

determine (305) a reward which is a combination of individual rewards of the individual actions respectively for adapting the reinforcement learning agent based on the reward.

15. The apparatus of claim 14, the reinforcement learning agent comprising a neural network, the reinforcement learning algorithm being a soft actor critic (SAC) algorithm, wherein critic and target networks involved in the SAC algorithm are distributional networks, wherein each network of the critic and target networks is configured to output for an input action and state pair a quantile distribution, wherein the reinforcement learning agent is adapted in each training step using a policy loss function, wherein the policy loss function is defined using for each action-state pair a coefficient-wise minimum of a first Q-value vector having an element per individual action and a second Q-value vector having an element per individual action, wherein each element of the first Q-value vector is a combination of quantiles which are obtained for the associated individual action and the state by one of the critic networks, wherein each element of the second Q-value vector is a combination of quantiles which are obtained for the associated individual action and the state by the other critic network.

Fig. 1

Determining, for a specific time unit, an available set of frequency resource units for scheduling a set of devices of a wireless communication system using multiple signal paths for data transmission — 201

Determining at least one feature vector descriptive of the set of devices, the set of frequency resource units and the signal path — 203

Performing per feature vector of the at least one feature vector an inference pass of a machine learning model to obtain an individual output using the feature vector as input — 205

Using the at least one individual output to determine an individual scheduling configuration of the set of frequency resource units to the set of devices — 207

Using the individual scheduling configurations to determine a scheduling decision to assign the set of frequency resource units to the set of devices, such that a frequency resource unit can be assigned to one or more signal paths — 209

Fig. 2

Determining for the training step a time unit, a set of devices, a set of frequency resource units, a signal path of signal paths for transmission in the time unit;

301

Using by the reinforcement learning agent a state defined by a feature vector descriptive of the set of devices, the set of frequency resource units and the signal path to perform an action comprising individual actions, wherein each individual action is defined by an assignment of a respective frequency resource unit of the set of frequency units

303

Determining a reward which is a combination of individual rewards of the individual actions respectively for adapting the reinforcement learning agent based on the reward

305

# Fig. 3

400

input layer
(N input blocks)          output layer
(M output blocks)

hidden layers

K inputs for
UE 1                                      N+1 outputs
for RBG 1

1                    1
2                    2
⋮                    ⋮
K                    N+1

K inputs for
UE 2                                      N+1 outputs
for RBG 2

1                    1
2                    2
⋮                    ⋮
K                    N+1

⋮            ⋮  ⋯  ⋮                      ⋮

K inputs for
UE N                                      N+1 outputs
for RBG M

1                    1
2                    2
⋮                    ⋮
K                    N+1

401                      402

Fig. 4

Obtain valid UEs for the
MU-MIMO user layer  `501`

Shuffle or sort
scheduling candidate
UEs in priority order
(optional)  `502`

Fill input block for the
next UEs.
Fill action mask for the
next UE for all RBGs  `503`

Input layer full or no more candidates?

FALSE

TRUE

Propagate input
through the Deep
Scheduler neural
network  `504`

Apply action mask to
the output layer.  `505`

`510`

For example:
Scale output to positive
values. Apply mask by
element-wise array
multiplication.

Schedule UEs for each
RBG based on output
block of corresponding
RBG  `506`

More UEs schedulable spatially?

TRUE

FALSE

Scheduling done.  `507`

Fig. 5

Fig. 6

Fig. 7

**EUROPEAN SEARCH REPORT**

Application Number

EP 25 21 0274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2024/217673 A1 (NOKIA SOLUTIONS & NETWORKS OY [FI]) 24 October 2024 (2024-10-24) ----- | 1-15 | INV. H04W72/0453 H04W72/121 |
| A | GUO XIAOJUN ET AL: "A Novel User Selection Massive MIMO Scheduling Algorithm via Real Time DDPG", GLOBECOM 2020 - 2020 IEEE GLOBAL COMMUNICATIONS CONFERENCE IEEE, 7 December 2020 (2020-12-07), pages 1-6, XP033882326, DOI: 10.1109/GLOBECOM42002.2020.9322383 [retrieved on 2021-01-13] ----- | 1-15 | |
| A | CN 112 311 486 B (UNIV BEIJING POSTS & TELECOMM) 3 August 2021 (2021-08-03) ----- | 1-15 | |

TECHNICAL FIELDS SEARCHED (IPC)

H04W

The present search report has been drawn up for all claims

| Place of search | Date of completion of the search | Examiner |
|---|---|---|
| The Hague | 23 March 2026 | Atanasovski, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 0274

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2026

| Patent document cited in search report | Publication date | Patent family member(s) | Publication date |
|---|---|---|---|
| WO 2024217673 A1 | 24-10-2024 | EP 4699395 A1<br>WO 2024217673 A1 | 25-02-2026<br>24-10-2024 |
| CN 112311486 B | 03-08-2021 | NONE | |

EPO FORM P0459

For more details about this annex : see Official Journal of the European Patent Office, No. 12/82